# EUROPEAN PATENT APPLICATION

(11) **EP 4 807 685 A1**
(43) Date of publication of application: **16.09.2026**
(21) Application number: 24889069.1
(22) Date of filing: 04.11.2024
(51) Int. Cl.: G06T 17/20, G06N 3/092, G06F 30/28, G06F 30/27, G06N 3/04, G06F 111/04, G06F 113/08, G06F 111/10, G06F 111/06

(54) **CFD AUTOMATION METHOD FOR OPTIMAL AIRFOIL FLOW ANALYSIS BASED ON REINFORCEMENT TRAINING, CFD AIRFOIL FLOW ANALYSIS METHOD, AND CFD AIRFOIL FLOW ANALYSIS DEVICE**

(30) Priority: 09.11.2023 KR 20230154712; 22.02.2024 KR 20240026091; 29.10.2024 KR 20240150160
(71) Applicant: POSTECH Research and Business Development Foundation, Pohang-si, Gyeongsangbuk-do 37673 (KR)
(72) Inventor: YOU, Donghyun, Pohang-si, Gyeongsangbuk-do 37673 (KR); KIM, Innyoung, Pohang-si, Gyeongsangbuk-do 37673 (KR)
(74) Representative: HWP Intellectual Property
(86) International application number: PCT/KR2024/017197
(87) International publication number: WO 2025/100881

(57) **Abstract**

Disclosed is a computational fluid dynamics (CFD) flow analysis method for blades includes: generating an analysis automation model that predicts CFD flow analysis results according to input analysis conditions, the generating an analysis automation model comprising inputting a blade shape and flow conditions, determining analysis settings for flow analysis over blades, performing CFD simulation based on the determined analysis setting parameters to conduct flow analysis over blades, evaluating results of the performed flow analysis over blades, and training through reinforcement learning using artificial neural networks to satisfy predetermined evaluation criteria, inputting arbitrary blade shape conditions and flow conditions, and determining analysis setting parameters by applying the analysis automation model to the input blade shape and flow conditions, predicting CFD simulation, and outputting the predicted CFD simulation as flow analysis results.

## Description

### [Technical Field]

The present disclosure relates to a computational fluid dynamics (CFD) automation method for optimal flow analysis over blades based on reinforcement learning, a method for analyzing flow around blades using CFD, and a device for analyzing flow around blades using CFD.

### [Background Art]

Flow analysis around blades plays a crucial role in the design of various fluid machinery such as aircraft wings, ship propellers, aircraft engines, gas turbines, steam turbines, and compressors. This flow analysis is primarily conducted through Computational fluid dynamics (CFD) and is considered an essential step for design optimization. For accurate and efficient flow analysis using CFD, professional settings are required, including the generation of computational meshes suitable for flow conditions and geometry, selection of turbulence models, and configuration of appropriate numerical methods.

However, the flow around blades is very complex, making it difficult to determine the ideal analysis settings a priori. As a result, appropriate settings should be found through iterative simulations, which is a time-consuming and costly process. Moreover, settings deemed appropriate for specific conditions may become less effective when flow conditions or geometry change, necessitating the repetition of the entire process. Additionally, analysis results can vary significantly based on the engineer's subjective judgment, negatively impacting the reliability of calculations.

Therefore, a new approach is needed to increase the accuracy and efficiency of flow analysis over blades, and to reduce time and costs. Through this, a technical solution is urgently required to solve various problems that occur during the flow analysis process and to consistently obtain reliable results.

### [Disclosure]

### [Technical Problem]

The present disclosure attempts to provide a computational fluid dynamics (CFD) automation method for reinforcement learning-based optimal flow analysis over blades, which can obtain highly accurate analysis results cost-effectively by optimizing and automating the entire process of analyzing flow around blades.

Additionally, embodiments aim to provide an automated flow analysis method for blades and a flow analysis device for blades using CFD through reinforcement learning.

However, the problems that the embodiments of the present disclosure aim to solve are not limited to the aforementioned issues and can be diversely expanded within the scope of the technical concepts included in the present disclosure.

### [Technical Solution]

According to an embodiment, a computational fluid dynamics (CFD) flow analysis method for blades includes: generating an analysis automation model that predicts CFD flow analysis results according to input analysis conditions, inputting arbitrary blade shape conditions and flow conditions, and determining analysis setting parameters by applying the analysis automation model to the input blade shape conditions and flow conditions, predicting a CFD simulation, and outputting the predicted CFD simulation as flow analysis results. The generating an analysis automation model includes: inputting a blade shape and flow conditions, determining analysis settings for flow analysis over blades, performing flow analysis over blades by conducting a CFD simulation based on the determined analysis setting parameters, evaluating results of the performed flow analysis over blades, and training through reinforcement learning using an artificial neural network to satisfy predetermined evaluation criteria.

The generating an analysis automation model may include generating an analysis setting model that determines analysis setting parameters according to the input analysis conditions, and generating an analysis performance model that predicts CFD flow analysis results. The generating an analysis setting model may include selecting analysis settings for the flow analysis over blades based on the input blade shape and flow conditions, and training analysis setting model using a deep reinforcement learning algorithm with an artificial neural network such that the selected analysis settings satisfy predetermined quality criteria. The generating an analysis performance model may include performing the flow analysis over blades using the CFD simulation, evaluating the results of the performed flow analysis over blades, and training the analysis performance model using a deep reinforcement learning algorithm with an artificial neural network to satisfy the evaluation criteria.

The analysis settings for the flow analysis over blades may include generating a computational mesh, selecting a turbulence model, and choosing a numerical method.

The blade shape may be expressed by blade shape parameters BSP and a blade pitch, and the flow conditions may be represented in a dimensionless manner by isentropic Reynolds number and Mach number at the outlet, Re_{is,out} and Ma_{is,out} respectively, and inflow angle θᵢₙ.

The generating analysis setting model may include defining state **s** according to the following equation: $s = \left[BSP,pitch,{N}_{o},{β}_{le},{β}_{te},Δ{n}_{1}\right] ,$ defining action **a** according to the following equation, $a = \left[{y}_{in}, {y}_{out}, {α}_{camber}, {x}_{in}^{o}, {x}_{out}^{o}, δ\right] ,$ and
generating a mesh using meshing parameters obtained by determining action based on given state for each episode, evaluating quality of the generated mesh and calculating a reward, and training the analysis setting model using a single-step actor-critic algorithm.

Here, BSP denotes blade shape parameters, pitch represents a blade spacing, Nₒ represents a total number of nodes in O-type mesh, βₗₑ represents degree of clustering of nodes at a leading edge, βₜₑ represents degree of clustering of nodes at a trailing edge, Δn₁ represents first cell height in a direction normal to a blade surface, yᵢₙ represents inlet position in a vertical direction, yₒᵤₜ represents outlet position in a vertical direction, α_{camber} represents degree of curvature of periodic boundaries following a camber line, x^{o}ᵢₙ represents HO-type interface position in a horizontal direction, x^{o}ₒᵤₜ represents OH-type interface position in a horizontal direction, and δ represents a ratio of number of nodes of O-type mesh in a tangential direction to a normal direction to blade surface.

The reward may be defined based on mesh quality that minimizes numerical errors due to geometric defects in the generated mesh, and the mesh quality may be evaluated by calculating a reward defined using mesh quality metrics including a ratio of determinants of Jacobian matrices Q_{J} and a cell skewness Q_{S}.

The evaluation criteria for assessing the results of the performed flow analysis over blades may include a reward function that evaluates accuracy of calculation and efficiency of calculation in the CFD simulation.

The accuracy of calculation may be computed through an error between high-quality data, which includes experimental data or high-resolution numerical data, and the results of the performed flow analysis over blades. The efficiency of calculation may be computed by measuring a total time required to perform the flow analysis over blades.

The generating analysis performance model may include defining state **s** according to the following equation: $s = \left[BSP,pitch, {Re}_{is , out}, {Ma}_{is , out},{θ}_{in}, ω\right] ,$ defining action **a** according to the following equation, $a = \left[{N}_{o},{β}_{le},{β}_{te},Δ{n}_{1}\right] ,$ and
performing action based on given state for each episode to complete CFD simulation, calculating the reward from the CFD simulation results, and training the analysis performance model using an actor-critic algorithm.

Here, BSP denotes blade shape parameters, pitch represents a blade spacing, Re_{is,out} represents isentropic Reynolds number at an outlet, Ma_{is,out} represents Mach number at an outlet, θᵢₙ represents an inflow angle, w represents weight, Nₒ represents a total number of nodes in O-type mesh, βₗₑ represents degree of clustering of nodes at a leading edge, βₜₑ represents degree of clustering of nodes at a trailing edge, and Δn₁ represents first cell height in a direction normal to a blade surface.

The generating the analysis performance model may include collecting learning data by performing CFD simulations in parallel with multiple agents using multi-agent reinforcement learning.

A computational fluid dynamics (CFD) flow analysis over blades device according to an embodiment includes: an analysis automation model generator that generates an analysis automation model that predicts CFD flow analysis results according to input analysis conditions, and a flow analyzer over blades that receives input of arbitrary blade shape conditions and flow conditions, applies the analysis automation model to the input blade shape conditions and flow conditions to determine analysis setting parameters, and performs CFD simulation to predict and output flow field as CFD flow analysis results. The analysis automation model generator may input a blade shape and flow conditions, determine analysis settings for flow analysis over blades, perform flow analysis over blades by conducting a CFD simulation based on the determined analysis setting parameters, evaluate results of the performed flow analysis over blades, and train the analysis automation model through reinforcement learning using artificial neural network to satisfy predetermined evaluation criteria.

The analysis automation model generator may include an analysis setting model that determines analysis setting parameters according to the input analysis conditions, and an analysis performance model that predicts CFD flow analysis results. The analysis setting model may select analysis settings for the flow analysis over blades based on the input blade shape and flow conditions, and be trained using a deep reinforcement learning algorithm with an artificial neural network such that the selected analysis settings satisfy predetermined quality criteria. The analysis performance model may perform the flow analysis over blades with the CFD simulation, evaluate results of the performed flow analysis over blades, and be trained with a deep reinforcement learning algorithm using an artificial neural network to satisfy the evaluation criteria.

A computational fluid dynamics (CFD) automation method for optimal flow analysis over blades according to an embodiment includes: inputting analysis conditions including a blade shape and flow conditions, determining analysis settings for the flow analysis over blades, performing the flow analysis over blades by conducting a CFD simulation based on the determined analysis setting parameters, evaluating results of the performed flow analysis over blades, and training through a reinforcement learning using an artificial neural network such that the results of the flow analysis over blades satisfy predetermined evaluation criteria.

The CFD automation method may further include selecting analysis settings for the flow analysis over blades based on the input blade shape and the flow conditions, and training using a deep reinforcement learning algorithm with an artificial neural network such that the selected analysis settings satisfy predetermined quality criteria.

The analysis settings for the flow analysis over blades may include generating a computational mesh, selecting a turbulence model, and choosing a numerical method.

The evaluation criteria for assessing the results of the performed flow analysis over blades may include a reward function that evaluates accuracy of calculation and efficiency of calculation in the CFD simulation.

The accuracy of calculation may be computed through an error between high-quality data, which includes experimental data or high-resolution numerical data, and the results of the performed flow analysis over blades. The efficiency of calculation may be computed by measuring a total time required to perform the flow analysis over blades.

The generating the analysis performance model may include collecting learning data by performing CFD simulations in parallel with multiple agents using multi-agent reinforcement learning.

The reinforcement learning may include calculating using a deep reinforcement learning algorithm including Deep Q-Network, PPO (Proximal Policy Optimization), or Actor-Critic algorithms, based on an artificial neural network technology.

According to an embodiment, a computer device includes at least one processor configured to execute computer-readable instructions. The at least one processor may be configured to generate an analysis automation model that predicts CFD flow analysis results according to input analysis conditions, input arbitrary blade shape conditions and flow conditions, determine analysis setting parameters by applying the analysis automation model to the input blade shape and flow conditions, predict CFD simulation, and output the predicted CFD simulation as flow analysis results. The generating an analysis automation model may include inputting a blade shape and flow conditions, determining analysis settings for flow analysis over blades, performing CFD simulation based on the determined analysis setting parameters to conduct flow analysis over blades, evaluating results of the performed flow analysis over blades, and training the analysis automation model through reinforcement learning using an artificial neural network to satisfy predetermined evaluation criteria.

### [Advantageous Effects]

According to some embodiments, a CFD automation method for optimal analysis of flow around blades based on reinforcement learning can automate the entire process of CFD for optimizing flow analysis over blades.

Through this, it is possible to improve the accuracy and efficiency of analysis, reduce time and costs, increase the reliability of calculation results, and achieve technological innovation in the field of fluid machinery design.

Furthermore, an automated CFD flow analysis method and CFD flow analysis device according to some embodiments can derive optimal analysis results with improved analysis accuracy and efficiency, while saving time and costs.

Furthermore, by minimizing the engineer's involvement in flow analysis over blades, the entry barrier for analysis can be lowered and the advancement of related research can be promoted.

### [Description of Drawings]

FIG. 1 is a flowchart illustrating a computational fluid dynamics (CFD) automation method for optimal analysis of flow around blades based on reinforcement learning according to an embodiment.
FIG. 2 is a schematic diagram illustrating a CFD automation method for optimal analysis of flow around blades based on reinforcement learning according to an embodiment.
FIGS. 3A and 3B are diagrams illustrating a conceptual design of a blade parameterization method.
FIG. 4 is a schematic diagram illustrating a process of generating computational meshes through setting of meshing parameters required in a mesh generator.
FIG. 5 is a schematic diagram showing a mesh generation algorithm.
FIG. 6 shows a computational configuration for flow simulation through a blade passage.
FIG. 7 is a graph showing time taken per iteration for 1000 randomly generated calculation configurations according to number of cells.
FIG. 8 is a diagram showing meshes used to evaluate grid convergence.
FIG. 9 is a schematic diagram illustrating the weighted Chebyshev method for determining the Pareto front using two objective functions (normalized error function and normalized cost function).
FIG. 10 is a schematic diagram of multi-agent reinforcement learning for automated mesh generation to achieve optimal CFD simulation.
FIG. 11 is a schematic diagram illustrating an analysis device of flow around blades using CFD according to an embodiment.
FIG. 12 is a flowchart illustrating an analysis method of flow around blades using CFD according to an embodiment.
FIG. 13 is a diagram showing reinforcement learning results of a flow analysis method over blades using CFD according to an embodiment.
FIG. 14 is a diagram showing optimal flow analysis results over blades using CFD automatically obtained after learning is completed in a flow analysis method over blades using CFD according to one embodiment.
FIG. 15 is an example diagram representing a neural network model according to an embodiment.
FIG. 16 is a diagram illustrating an example of a computer device according to an embodiment.

### [Mode for Invention]

Hereinafter, referring to the attached drawings, embodiments of the present invention will be described in detail to enable those skilled in the art to easily implement the invention. In the drawings, parts unrelated to the explanation have been omitted for clarity in explaining the present invention, and the same reference numerals have been used throughout the specification for identical or similar components. Additionally, in the attached drawings, some components may be exaggerated, omitted, or schematically illustrated, and the size of each component does not entirely reflect its actual size.

The attached drawings are intended only to facilitate easy understanding of the embodiments disclosed in this specification, and the technical concept disclosed in this specification is not limited by the attached drawings. It should be understood that all modifications, equivalents, or substitutes within the spirit and technical scope of the invention are included.

First, second, and similar ordinal terms may be used to describe various components, but these components are not limited by these terms. These terms are used only for the purpose of distinguishing one component from another.

Throughout the specification, terms such as "comprise", "include" or "have" should be understood as indicating the presence of features, numbers, steps, actions, components, elements, parts, or combinations thereof described in the specification, without precluding the possibility of the presence or addition of one or more other features, numbers, steps, actions, components, elements, parts, or combinations thereof. Therefore, when a part is said to "comprise" or "include" an element, this means that, unless specifically stated otherwise, it does not exclude other elements but may include additional elements.

Furthermore, throughout the specification, when it is stated that something is "connected," this does not only mean that two or more elements are directly connected. It can also mean that two or more elements are indirectly connected through other elements, physically connected as well as electrically connected, or referred to by different names according to their position or function but are actually one unit.

Furthermore, terms such as "...unit," "...device," "...module," etc., described in the specification refer to units that process at least one function or operation, and these can be implemented as hardware, software, or a combination of hardware and software.

In this specification, "transmission or provision" may include not only direct transmission or provision, but also indirect transmission or provision through other devices or using bypass routes.

Expressions written in singular form in this specification may be interpreted as singular or plural unless explicitly stated as "one" or "single".

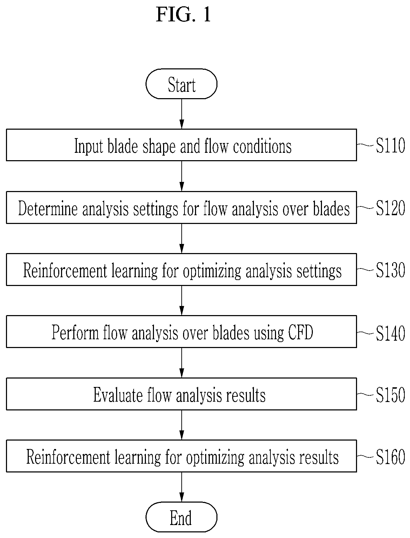

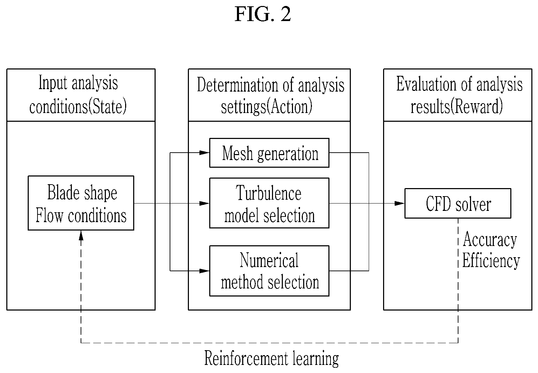

FIG. 1 is a flowchart illustrating a computational fluid dynamics automation method for optimal flow analysis over blades based on reinforcement learning according to an embodiment, and FIG. 2 is a schematic diagram illustrating a computational fluid dynamics automation method for optimal analysis of flow around blades based on reinforcement learning according to an embodiment.

Referring to FIG. 1 and FIG. 2, the computational fluid dynamics (CFD) automation method according to the present embodiment includes inputting analysis conditions, determining analysis settings, and evaluating analysis results. The inputting analysis conditions may include a process of inputting a blade shape and flow conditions (S110). The determining analysis settings may include a process of determining analysis settings for flow analysis over blades (S120), and include generating a mesh, selecting a turbulence model, and selecting a numerical method. The determining analysis settings may involve applying a reinforcement learning approach, whereby learning or training may be performed to optimize the analysis settings (S130).

The evaluating the analysis results may include performing flow analysis over blades through CFD analysis (S140) and evaluating the results of the flow analysis over blades (S150). In the evaluating the analysis results, a reinforcement learning approach may be applied to perform learning or training to optimize the analysis results (S160).

Reinforcement learning is a process of exploring actions that maximize rewards in a specific state. For example, the state may be defined as input analysis conditions, the action as analysis setting parameters, and the reward as accuracy and efficiency of the analysis results. In the case of reinforcement learning, learning may be performed using deep reinforcement learning algorithms that incorporate artificial neural network technology. In this embodiment, an actor-critic algorithm may be used, and other algorithms such as Deep Q-Network and Proximal Policy Optimization (PPO) may also be used.

After completing the learning process, it is possible to automatically determine optimal analysis setting parameters according to newly given arbitrary analysis conditions, thus automating the entire CFD process of flow analysis over blades. The optimal parameters can be determined in a non-iterative manner without human intervention, and the optimal mesh resolution can be identified.

The following describes in more detail the computational fluid dynamics automation method for optimal flow analysis over blades, step by step.

First, at the inputting analysis conditions, a blade shape and flow conditions are input.

Blade parametrization methods may be used to generate various types of blades in axial gas turbines, supersonic impulse turbines, axial compressors, and more. Using blade shape parameters denoted as BSP, a two-dimensional blade profile with continuous curvature may be produced from non-uniform rational basis spline curves as shown in mathematical expression 1. $BSP = \left(C,ψ,{θ}_{le},{θ}_{te},{d}_{le},{d}_{te},{ρ}_{le},{ρ}_{te},{t}_{1}^{u},…,{t}_{k}^{u},{t}_{1}^{l},…,{t}_{k}^{l}\right)$

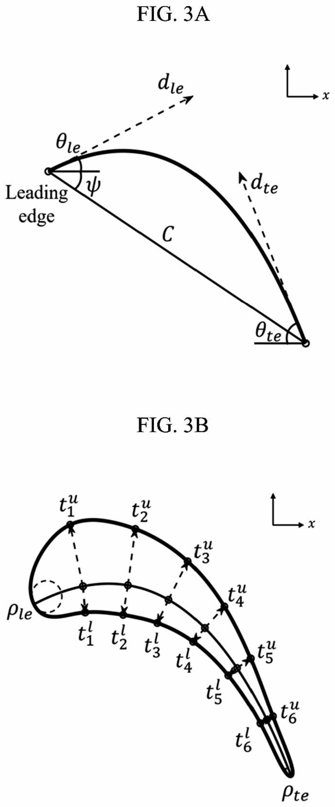

FIGS. 3A and 3B are diagrams illustrating a conceptual design of a blade parameterization method.

Referring to FIG. 3A, initially, a camber line is established using a first six elements of BSP. A chord line of length C is determined by a stagger angle ψ from a leading edge. Then, the camber line is constructed with a curvature defined by metal angles θₗₑ and θₜₑ at leading and trailing edges, respectively. Here, tangent proportions at respective edge are controlled by dₗₑ and dₜₑ.

Remaining elements of BSP define upper and lower profiles of the blade along the camber line, as shown in FIG. 3B. The radii of curvature at the leading and trailing edges are determined by ρₗₑ and ρₜₑ. The parameters $\left({t}_{1}^{u},…,{t}_{k}^{u}\right)$ and $\left({t}_{1}^{l},…,{t}_{k}^{l}\right)$ define thickness distributions of the upper and lower sections of the blade, where k indicates a number of parameters for the thickness distribution. In this example, k = 6 is chosen, as it has been found to be sufficient to accurately represent a diverse range of turbine blade profiles while meeting precision standards required for manufacturing blades for axial gas turbines.

The range of each element of BSP may be set wide enough to include blades in the previous literature with different shapes and applications. The range is as follows in mathematical expression 2. $\begin{matrix}- 90 ° \leq ψ , {θ}_{le} , {θ}_{te} \leq 90 ° , \\ 0.4 C \leq {d}_{le} , {d}_{te} \leq 0.8 C , \\ 0.0001 C \leq {ρ}_{le} , {ρ}_{te} , {t}_{k}^{u} , {t}_{k}^{l} \leq 0.4 C\end{matrix}$

Among these ranges, unrealistic blade shapes that are not simply connected or have two or more extremal points are excluded.

The blade geometry is captured by BSP and pitch (a spacing between blades), and the flow conditions may be expressed in a dimensionless manner using the isentropic Reynolds number and Mach number at the outlet, Re_{is,out} and Ma_{is,out}, respectively, and the inflow angle θᵢₙ. The nondimensionalization may be achieved using boundary conditions (p_{t,in}, T_{t,in}, and pₒᵤₜ) and an axial chord length Cₐₓ of the blade, as shown in mathematical expression 3. $\begin{matrix}{Ma}_{is , out} = \sqrt{\frac{2}{γ - 1} \left({\left(\frac{{p}_{t , in}}{{p}_{out}}\right)}^{\frac{γ - 1}{γ}}-1\right)} , \\ {Re}_{is , out} = \frac{{ρ}_{is , out} {U}_{is , out} {C}_{ax}}{{μ}_{is , out}} .\end{matrix}$

Here, ρ_{is,out} = pₒᵤₜ/(RT_{is,out}) is derived from ideal gas law, and µ_{is,out} may be calculated using Sutherland's law, where ${U}_{is , out} = {Ma}_{is , out} \sqrt{{γRT}_{is , out}}$, and *T_{is,out}* = *T_{t,in}*(*pₒᵤₜ*/*p_{t,in}*)^{(γ-1)/(γ)}. This nondimensionalization not only accommodates simulations of varying geometrical and physical scales but also consolidates four variables (p_{t,in}, T_{t,in}, pₒᵤₜ, and Cₐₓ) into two variables (Re_{is,out} and Ma_{is,out}), reducing the data required for learning.

The ranges of flow conditions are defined wide enough to encompass complex flow features such as shock and separation, and is as follows in mathematical expression 4. $\begin{matrix}5 \times {10}^{4} \leq {Re}_{is , out} \leq 5 \times {10}^{6} , \\ 0.4 \leq {Ma}_{is , out} \leq 1.1 , \\ {θ}_{le} - 15 ° \leq {θ}_{in} \leq {θ}_{le} + 15 ° ,\end{matrix}$

Here, θᵢₙ is adaptively adjusted based on the blade shape by defining the value relative to θₗₑ, which is the metal angle at the leading edge, in order to mitigate unrealistic flow conditions.

At the determining analysis settings, a computational mesh suitable for analysis is generated, and turbulence models and numerical methods are selected.

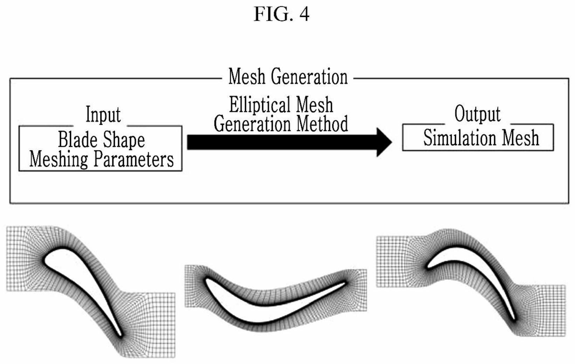

FIG. 4 is a schematic diagram illustrating a process of generating a computational meshes through setting of meshing parameters required in a mesh generator.

Referring to FIG. 4, a mesh generator trained using deep reinforcement learning may generate a structured mesh for a two-dimensional blade passage using an elliptical mesh generation method. An HOH-type mesh, which combines an H-type mesh at the inlet and outlet sides with an O-type mesh near the blade, may be generated by specifying meshing parameters. Descriptions of the parameters are listed in Table 1.

**[Table 1]**

| Boundary construction | Description |
|---|---|
| yᵢₙ | Inlet position in vertical direction |
| yₒᵤₜ | Outlet position in vertical direction |
| α_{camber} | Degree of curvature of periodic boundaries following the camber line |
| x^{o}ᵢₙ | HO-type interface position in horizontal direction |
| x^{o}ₒᵤₜ | OH-type interface position in horizontal direction |

| Resolution Control | Description |
|---|---|
| Nₜ | Number of nodes of O-type mesh in tangential direction to blade surface |
| Nₙ | Number of nodes of O-type mesh in normal direction to blade surface |
| βₗₑ | Degree of clustering of nodes at leading edge |
| βₜₑ | Degree of clustering of nodes at trailing edge |
| Δn₁ | First cell height in the direction normal to the blade surface |

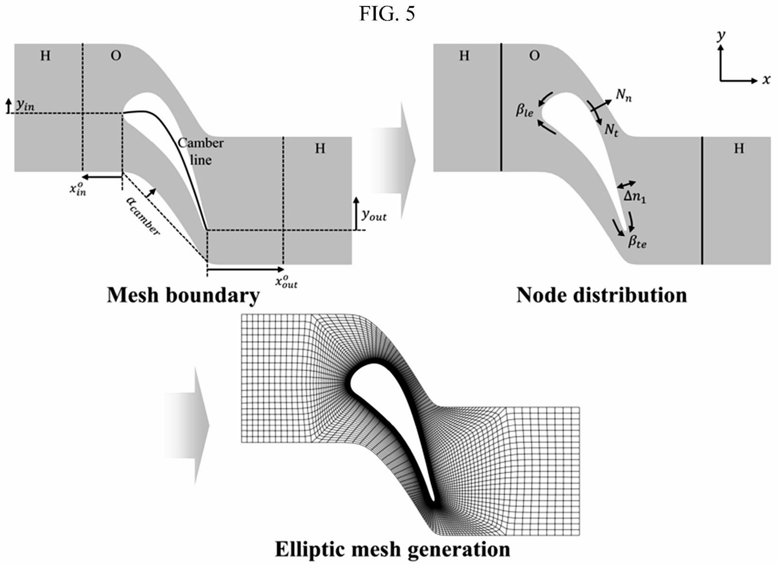

FIG. 5 is a schematic diagram showing a mesh generation algorithm.

When given a blade shape with pitch, a boundary shape of mesh may be defined based on the following parameters: yᵢₙ, yout, α_{camber}, x^{o}ᵢₙ, and x^{o}ₒᵤₜ. Here, yᵢₙ and yₒᵤₜ determine inlet and outlet positions in a vertical direction, respectively. To accommodate mesh generation for blades with varying curvatures, the curvature of the periodic boundaries is modulated by α_{camber}, which ranges from a straight line (α_{camber} = 0) to fully conforming to the camber line (α_{camber} = 1). The locations of interface between O-type mesh and H-type mesh at the inlet and outlet sides are determined by x^{o}ᵢₙ and x^{o}ₒᵤₜ, respectively.

Subsequently, mesh resolution is determined based on Nₜ, Nₙ, βₗₑ, βₜₑ, and Δn₁. Initially, the numbers of nodes of the O-type mesh in tangential and normal directions to the blade surface are specified by Nₜ and Nₙ, respectively. Nₜ nodes may be distributed along the blade surface to ensure increased resolution at the leading and trailing edges. This distribution follows a hyperbolic tangent function, with βₗₑ and βₜₑ controlling the clustering intensity towards the leading and trailing edges, respectively. Nₙ nodes are distributed in a direction normal to the blade surface, clustering at the blade surface following a hyperbolic tangent function to adequately resolve near-wall physics. The clustering may be defined such that the height of the first cell at the blade surface corresponds to Δn₁. After the nodes have been distributed within the domain, the mesh may be ultimately generated using an elliptic mesh generation method to ensure high orthogonality near the blade surface without slope discontinuities.

The goal of the first-step training is to enable the mesh generator to autonomously select geometry-controlling portions from the entire set of meshing parameters (see Table 1) for various blade passage configurations. To achieve this, state **s** may be defined as shown in the following mathematical expression 5. $s = \left[BSP,pitch,{N}_{o},{β}_{le},{β}_{te},Δ{n}_{1}\right] ,$ where BSP represents blade shape parameters as outlined in mathematical expression 1, pitch refers to a blade spacing, and Nₒ = Nₜ × Nₙ represents the total number of nodes in the O-type mesh. The reason for including Nₒ, βₗₑ, βₜₑ, and Δn₁ as states rather than optimization actions is to provide adaptability in mesh resolution under various flow conditions. These parameters may be optimized in subsequent training stages involving CFD simulations.

Action **a**, which includes geometry-controlling meshing parameters, may be defined as follows in mathematical expression 6. $a = \left[{y}_{in}, {y}_{out}, {α}_{camber}, {x}_{in}^{o}, {x}_{out}^{o}, δ\right] ,$ where δ may be incorporated to allocate the overall mesh resolution Nₒ, which is predetermined as a state variable, along the normal and tangential directions by δ = Nₜ/Nₙ. In other words, δ represents a ratio of the number of nodes in the O-type mesh in the tangential direction to the normal direction with respect to the blade surface.

The reward may be defined based on mesh quality, aiming to minimize numerical errors caused by geometrical defects in the mesh. To this end, two mesh quality metrics are considered: the ratio of determinants of the Jacobian matrices Q_{J} and the cell skewness Q_{S}. The metrics Q_{J} and Q_{S} are necessary for achieving uniform cell distribution and maintaining high orthogonality between adjacent cells, respectively. Due to these characteristics, the metrics may be used to generate a high-quality quadrilateral mesh. The calculation of Q_{J} may be given by the following mathematical expression 7. ${Q}_{J} = \frac{min \left({J}_{i , j}+{J}_{i + 1 , j},{J}_{i + 1 , j - 1},{J}_{i , j - 1}\right)}{max \left({J}_{i , j}+{J}_{i + 1 , j},{J}_{i + 1 , j - 1},{J}_{i , j - 1}\right)} ,$ where J_{i,j} is determinant of the Jacobian matrix at each node (x_{i,j},y_{i,j}), which may be calculated as shown in the following mathematical expression 8. ${J}_{i , j} = \left|\begin{matrix}\frac{\partial x}{\partial i} & \frac{\partial x}{\partial j} \\ \frac{\partial y}{\partial i} & \frac{\partial y}{\partial j}\end{matrix}\right| = \left|\begin{matrix}\frac{{x}_{i + 1 , j} - {x}_{i - 1 , j}}{2} & \frac{{x}_{i , j + 1} - {x}_{i , j - 1}}{2} \\ \frac{{y}_{i + 1 , j} - {y}_{i - 1 , j}}{2} & \frac{{y}_{i , j + 1} - {y}_{i , j - 1}}{2}\end{matrix}\right| ,$ where x and y are coordinates of the node, and i and j are the indices of the node. The Q_{J} value represents area consistency among adjacent cells, with higher values indicating smoother resolution changes. The skewness Q_{S} may be calculated using the following mathematical expression 9. ${Q}_{S} = 1 - max \left(\frac{90 ° - {θ}_{min}}{90 °}, \frac{{θ}_{max} - 90 °}{90 °}\right) ,$ where θₘᵢₙ and θₘₐₓ represent the minimum and maximum values among the interior angles of the cell. A higher Qs value indicates reduced cell distortion of the cell and better orthogonality with neighboring cells. The reward r may be defined by the following mathematical expression 10. $r = {\left(\frac{{\left.\left({Q}_{J}\right)\right|}_{min} + {\left.\left({Q}_{J}\right)\right|}_{avg} + {\left.\left({Q}_{S}\right)\right|}_{min} + {\left.\left({Q}_{S}\right)\right|}_{avg}}{4}\right)}^{2} ,$ where, ( )|ₘᵢₙ and ( )|_{avg} represent the minimum and average values of the cells in the O-type mesh, respectively. This focus on the O-type mesh is due to the potential distortion of its cells to conform to the blade profile, as opposed to the cells of the H-type mesh that typically remain rectangular. For calculating Q_{J}, extra nodes may be incorporated at the boundaries of the O-type mesh to ensure smooth transitions at mesh interfaces and periodic boundaries. By considering both minimum and average values, the reward function may be designed to effectively assess the impact of the cell with the lowest quality and to provide a comprehensive view of the overall quality distribution of the mesh. The values of the metrics (Q_{J})|ₘᵢₙ, (Q_{J})|_{avg}, (Q_{S})|ₘᵢₙ, and (Q_{S})|_{avg} range between 0 and 1 by definition, thereby exhibiting comparable scales. The square term is employed in the reward function to increase sensitivity to higher values.

The first-step training is conducted using a single-step actor-critic algorithm. For each episode, state **s** is randomly assigned. Based on the state, the actor determines action as **a** = π_{φ}(**s**) with exploration noise ε. Then, the mesh generator produces a mesh using the meshing parameters from the given state and the chosen action. Subsequently, the quality of the generated mesh is evaluated and the reward r is calculated. The data (**s**,**a**,r) is stored in a buffer. Utilizing the data from the buffer, the critic network is updated to predict the reward more accurately, while the actor network is refined to produce actions that maximize the reward. Afterward, the next episode begins. This process is repeated until the networks converge. Since the training is conducted for a randomly given blade configuration in each episode, rather than sequentially training for a single configuration before moving on to the next, the converged network may generate optimal meshes for configurations within the defined range.

Actor and critic are structured as fully connected networks. All hidden layers use the Leaky ReLU activation functions, while the output layer of the network exceptionally uses a hyperbolic tangent function to bound action values. The Adam optimizer with a learning rate of 10⁻⁴ is employed to update the network parameters using a minibatch size N_{b} of 100, which is a common approach in actor-critic algorithms. To enhance stability in the learning process, the actor network is updated every two updates of the critic network. The exploration noise ε is generated from a normal distribution N(0, σ²), with a mean of 0 and standard deviation σ, where σ is defined as in the following mathematical expression 11. $σ = \left\{\begin{matrix}0.5 \left|{a}_{max}-{a}_{min}\right| & episode \leq 1000 , \\ 0.25 \left(cos\left(\frac{2 π}{1000}\times episode\right)+1\right) \left|{a}_{max}-{a}_{min}\right| & episode > 1000 .\end{matrix}\right.$

In early episodes, a higher σ is used to collect a diverse set of data. Subsequently, a cosine function is employed to systematically vary the magnitude of noise, balancing exploration and exploitation while reducing the influence of a specific noise value. Both networks include four hidden layers with 512, 256, 256, and 128 neurons.

As the number of episodes increases, the network is updated to produce higher geometric quality meshes for each newly introduced blade passage configuration. Consequently, high-reward data accumulates in the buffer, increasing the J_{π} value and eventually converging. To sufficiently train the network for the current optimization problem, approximately 10⁶ episodes are needed. The mesh generator trained in this phase will be utilized in the subsequent training phase for optimal CFD, where CFD simulations may be integrated to optimize resolution-related meshing parameters.

Meanwhile, in this embodiment, the selection of the turbulence model includes choosing the type and parameters of the turbulence model. For example, the turbulence model may be selected from among k-epsilon, k-omega, and k-omega SST. To select the turbulence model, an analysis setting determination unit 50 may be optimized through deep reinforcement learning.

In addition, the selection of the numerical method in this embodiment may include choice of discretization technique, matrix calculation algorithm, and selection of time-step size and residual criteria. For example, the discretization technique may be chosen from First-order upwind or Second-order central differencing, and the matrix calculation algorithm may be selected from Flexible Generalized Minimum Residual, Conjugate Gradient, or Bi-Conjugate Gradient Stabilized. For the selection of the numerical method, the analysis setting determination unit (50) may be optimized through deep reinforcement learning.

The evaluating analysis results involves performing flow analysis over blades using computational fluid dynamics with determined analysis settings, followed by an assessment of the analysis results.

Open-source software SU2 may be employed to solve two-dimensional steady-state compressible RANS (Reynolds Averaged Navier Stokes) equations for blade passage simulation. These equations are expressed as follows in mathematical expression 12. $∇ ⋅ {F}^{c} - ∇ ⋅ {F}^{v} = 0 ,$ where F^{c} and F^{v} represent convective flux and viscous flux, respectively, and are expressed as shown in the following mathematical expression 13. ${F}^{c} = \left\{\begin{matrix}ρv \\ ρv ⊗ v + \overline{\overline{I}} p \\ ρEv + pv\end{matrix}\right\} , {F}^{v} = \left\{\begin{matrix}0 \\ \overline{\overline{τ}} \\ \overline{\overline{τ}} ⋅ v + κ ∇ T\end{matrix}\right\} ,$ where, ρ is fluid density, v is velocity vector, E is total energy per unit mass, $\overline{\overline{I}}$ is identity matrix, p is static pressure, κ is thermal conductivity, T is temperature, and $\overline{\overline{τ}}$ is viscous stress tensor defined by the following mathematical expression 14. $\overline{\overline{τ}} = μ \left(∇v+∇{v}^{T}\right) - \frac{2}{3} μ \overline{\overline{I}} \left(∇⋅v\right) ,$ where, µ represents viscosity.

For turbulent flows, µ is divided into dynamic viscosity µ_{d} and turbulent viscosity µₜ based on the Boussinesq hypothesis, expressed as µ = µ_{d} + µₜ. Similarly, thermal conductivity is expressed as κ = κ_{d} + κₜ, where κ is computed from viscosity µ, specific heat capacity at constant pressure cₚ, and Prandtl number Pr, as κ = (cₚµ)/Pr. The dynamic viscosity µ_{d} is calculated using the Sutherland's law. The turbulent viscosity µₜ is obtained from a turbulence model. In this embodiment, the shear stress transport-k-ω (SST-k-ω) turbulence model may be employed. This model adopts k-ω model near wall and transitions to k-ε model in free stream, allowing accurate predictions in both near-wall and core regions using a blending function.

To close the mathematical expression 12, an equation of state for perfect gas is employed with specific heat ratio γ and gas constant R. Pressure is determined from p = (γ - 1)ρ[E - 0.5(v · v)], temperature is given by T = p/(ρR), and specific heat capacity at constant pressure as cₚ = (γR)/(γ-1). Governing equations are discretized using a finite volume method (FVM). The convective fluxes are discretized using the central Jameson-Schmidt-Turkel (JST) scheme. Gradients of flow variables required for evaluating the viscous fluxes are calculated using a weighted least-squares method.

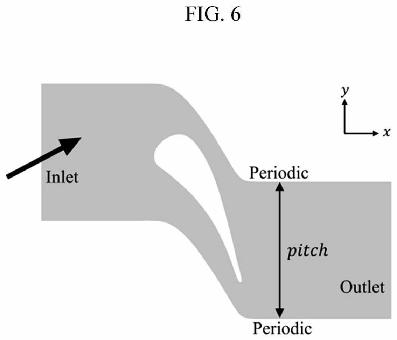

FIG. 6 shows a computational configuration for flow simulation through a blade passage.

Referring to FIG. 6, at the inlet, total pressure p_{t,in} and total temperature T_{t,in} are imposed with inflow angle θᵢₙ. Static pressure pₒᵤₜ is applied at the outlet. Periodic conditions are assigned for the upper and lower boundaries, which are separated by a distance of pitch. No-slip and adiabatic wall boundary conditions are prescribed at the blade surface.

At the evaluating analysis results, calculation accuracy and efficiency may be considered. The accuracy and efficiency of calculations may be simultaneously applied as objective functions through the concept of Pareto optimality in multi-objective optimization, and an approach through adjusting the weights between the two objective functions is also possible. Calculation accuracy may be computed through an error between high-quality data such as experimental data or high-resolution numerical data and current analysis results. Calculation efficiency may be computed by measuring total time spent on performing the analysis.

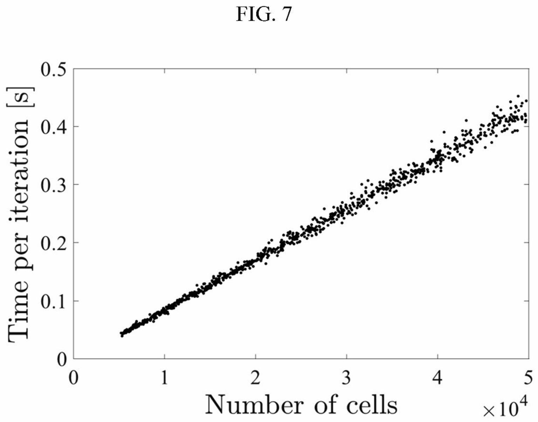

The reward function for evaluating analysis results may be devised to simultaneously consider the accuracy and efficiency of the simulations. For this purpose, two objective functions are employed in a multi-objective approach: the cost and the error of the simulation. First, the cost function, denoted as r_{c}, is designed to reflect total time required for one simulation and may be calculated as shown in the following mathematical expression 15. ${r}_{c} = iteration count \times {N}_{total} ,$ where, Nₜₒₜₐₗ represents total number of cells. This formulation is based on observation that time per iteration is O(Nₜₒₜₐₗ), which may be identified through simulations of 1000 random flow configurations, as illustrated in FIG. 7. This linear scaling is attributed to sparse matrix operations in the current iterative solver, which utilizes the Flexible Generalized Minimal Residual (FGMRES) method enhanced with an Incomplete Lower Upper (ILU) preconditioner.

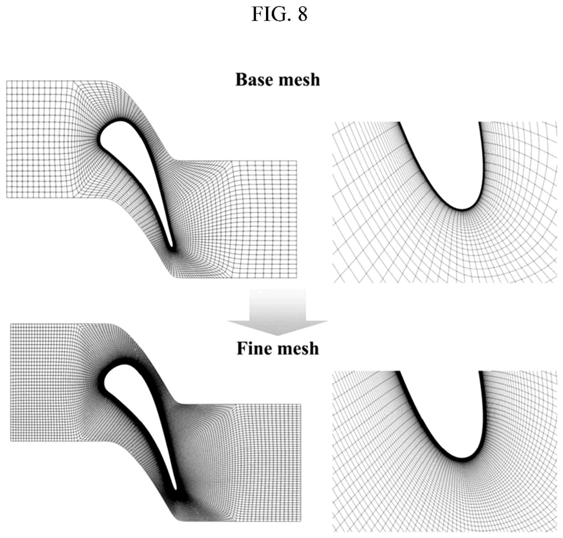

Error function may be designed to assess grid convergence by calculating the difference between simulation results obtained using two successively refined meshes: base meshes and fine meshes. The base mesh, initially produced by the DRL network, may be further refined to create a fine mesh by doubling the resolution along each axis, as shown on the left side of FIG. 8. Bicubic interpolation may be employed to preserve curvature of the blade, particularly at the leading and trailing edges, as illustrated on the right side of FIG. 8. The error function may be defined by the root mean square (RMS) errors computed at the node locations of the base mesh that remain unchanged during the refinement process, as shown in the following mathematical expression 16. $\begin{matrix}{r}_{e} = RMS {\left.\left({\left(Ma\right)}_{fine}-{\left(Ma\right)}_{base}\right)\right|}_{total field} \\ + RMS {\left.\left({\left({Ma}_{is}\right)}_{fine}-{\left({Ma}_{is}\right)}_{base}\right)\right|}_{blade surface} ,\end{matrix}$ where, error of Ma may be selected to capture flow features essential for blade passage analysis, such as boundary layers, wakes, and shock waves. Also, its dimensionless nature facilitates scaling across varied flow configurations. The error over the entire flow field is assessed by the first term, while the error along the blade surface is incorporated as the second term to reflect near-wall flow physics. For the second term, the isentropic Mach number Maᵢₛ is computed by substituting the pressure along the blade surface for pₒᵤₜ in mathematical expression 3.

Finally, using the weighted Chebyshev method, which guarantees the identification of all Pareto optimal solutions for both convex and nonconvex problems, the reward function r may be defined as shown in the following mathematical expression 17. $r = - max \left(w\times {r}_{e}^{∗},\left(1-w\right)\times {r}_{c}^{∗}\right) ,$ where, w represents a weight between the two objective functions, and it may be scaled as shown in the following mathematical expression 18. $\begin{matrix}{r}_{e}^{∗} = log \left({r}_{e}\times {10}^{2}+1\right) , \\ {r}_{c}^{∗} = log \left({r}_{c}/{10}^{7}+1\right) .\end{matrix}$

Logarithmic scaling may be employed to mitigate the impact of outliers during learning process. By multiplying rₑ by 10² and dividing r_{c} by 10⁷, the scales between the two objective functions may be matched to achieve better learning performance.

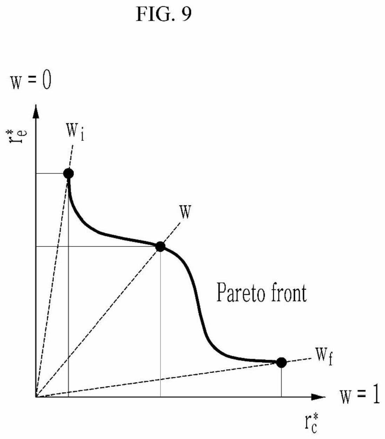

A schematic explanation of the weighted Chebyshev method for determining Pareto front is depicted in FIG. 9. For a given weight w, rectangles with a fixed width-to-height ratio and variable sizes are constructed on the plane of two objective functions r^{*}ₑ and r^{*}_{c}. As indicated by the minus sign in mathematical expression 17, the learning process aims to find a rectangle with the minimum size, which yields the Pareto optimal solution. By varying the values of w from 0 to 1, all Pareto front solutions may be obtained.

To mitigate high computational costs associated with acquiring data through CFD simulations, a method for data reproduction may be applied to increase both the quantity and diversity of data. Once rₑ and r_{c} are obtained from a single simulation, various weights may be applied to these values to computed the reward function. For example, 100 datasets may be reproduced by randomly varying the weight w between 0 and 1 for each episode.

In order to fully eliminate human intervention in the mesh generation process, the remaining resolution-controlling parameters are optimized through CFD simulations and are defined as action a according to the following mathematical expression 19. $a = \left[{N}_{o},{β}_{le},{β}_{te},Δ{n}_{1}\right] .$

State **s** is formulated to reflect the computational configuration, including blade geometry and flow conditions, as shown in the following mathematical expression 20. $s = \left[BSP, pitch, {Re}_{is , out}, {Ma}_{is , out}, {θ}_{in}, w\right] ,$ where, variable w is incorporated as a state variable with a range between 0 and 1, rather than a fixed value, determining the weight between two objectives: cost and error of the simulation. This approach allows users to obtain optimal meshes that balance accuracy and efficiency according to their preferences.

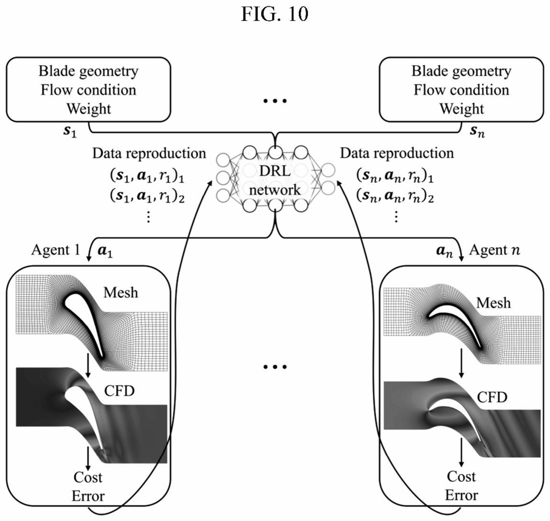

Multi-agent reinforcement learning may be employed to accelerate data acquisition speed required for training a mesh generator for optimal CFD. As shown in FIG. 10, multiple agents may conduct CFD simulations in parallel to collect data.

States, each comprising the blade geometry denoted by BSP and pitch, flow conditions indicated by Re_{is,out}, Ma_{is,out}, θᵢₙ, and weight w are randomly assigned to individual agents. Each agent generates a mesh based on action **a** = π_{φ}(**s**) with exploration noise ε, then proceeds to perform a CFD simulation. When agent i completes the CFD simulation, error function r_{e,i} and cost function r_{c,i} are calculated from the results, and reward rᵢ is computed. The number of data is subsequently amplified to (**s**ᵢ,**a**ᵢ,rᵢ)₁,...,(**s**ᵢ,**a**ᵢ,rᵢ)₁₀₀ using data reproduction method and stored in the buffer. The stored data is then used to update the actor and critic networks. Subsequently, the next episode begins, with a new task assigned to the corresponding agent. As tasks are dynamically reassigned as soon as agents complete them, data acquisition speed increases proportionally to the number of agents. This process is repeated until the network converges.

A total of 5 × 10⁵ RANS simulations are required to sufficiently train the network. Training employs 256 agents over 8 weeks, with each agent running on a single CPU core of an Intel(R) Xeon(R) E5-2650 v2 processor.

The analysis device of flow around blades using CFD may be implemented by applying the computational fluid dynamics automation method shown in FIG. 1, and flow analysis over blades using CFD may be performed using this device.

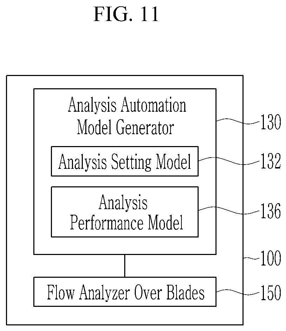

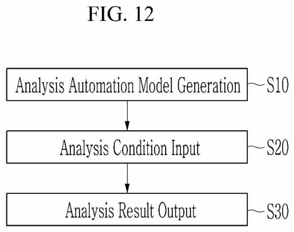

FIG. 11 is a schematic diagram illustrating an analysis device of flow around blades using CFD according to an embodiment, and FIG. 12 is a flowchart illustrating an analysis method of flow around blades using CFD according to an embodiment.

Referring to FIG. 11, an analysis device of flow around blades using CFD 100 according to an embodiment may include an analysis automation model generator 130 and an flow analyzer over blades 150. Referring to FIG. 12, an analysis method of flow around blades using CFD according to an embodiment may include an analysis automation model generation S10, an analysis condition input S20, and an analysis result output S30. The analysis automation model generator 130 performs the analysis automation model generation step, and the flow analyzer over blades 150 may perform the analysis condition input step S20 and the analysis result output step S30.

The analysis automation model generator 130 may generate an analysis setting model 132 that determines analysis setting parameters according to the input analysis conditions, and generate an analysis performance model 136 that predicts CFD flow analysis results according to the input analysis conditions.

The analysis setting model 132 may select analysis settings for flow analysis over blades based on the input analysis conditions, which are the blade shape and flow conditions, and may be trained using a deep reinforcement learning algorithm with artificial neural networks so that the selected analysis settings satisfy predetermined quality criteria. The analysis setting model 132 may determine analysis setting parameters for flow analysis over blades by receiving the blade shape and flow conditions as inputs.

The analysis settings for flow analysis over blades may include generating a computational mesh, selecting a turbulence model, and choosing a numerical method. Generating the computational mesh may involve generating a structured mesh for a two-dimensional blade passage using an elliptic mesh generation method. Selecting the turbulence model may include choosing the type and parameters of the turbulence model. The type of turbulence model may be selected from k-epsilon, k-omega, or k-omega SST. Selecting the numerical method may include choosing numerical methods, selecting matrix calculation algorithms, and setting the time-step size and residual criteria.

The blade shape may be expressed by blade shape parameters (BSP) according to mathematical expression 1 and pitch of the blade. The flow conditions may include Re_{is,out} and Ma_{is,out}, which are the isentropic Reynolds number and Mach number at the outlet respectively, and inlet angle θᵢₙ. The Reynolds number and Mach number Re_{is,out} and Ma_{is,out}, and the inlet angle θᵢₙ may be expressed in a nondimensional manner according to mathematical expression 3.

Generating an analysis setting model may include defining state **s** and action **a**, generating a mesh using meshing parameters obtained by determining actions based on given states for each episode, evaluating quality of the generated mesh and calculating rewards, and training using a single-step actor-critic algorithm. Here, state **s** may be defined according to mathematical expression 5, and action **a** may be defined according to mathematical expression 6.

The reward may be defined based on mesh quality that minimizes numerical errors due to geometric defects in the generated mesh. Specifically, the mesh quality may be evaluated by computing the reward r defined using mesh quality metrics of the ratio of determinants of Jacobian matrices Q_{J} and the cell skewness Q_{S}. Here, the reward r may be defined according to mathematical expression 10.

The analysis performance model 136 may perform a CFD simulation based on the determined analysis setting parameters to conduct flow analysis over blades, and may be trained using a deep reinforcement learning algorithm with artificial neural networks to satisfy predetermined evaluation criteria by evaluating the results of the performed flow analysis over blades. The analysis performance model 136 may predict CFD flow analysis results according to the input analysis conditions based on the determined analysis settings.

The evaluation criteria for assessing the results of the flow analysis over blades may include a reward function that evaluates accuracy and efficiency of the calculations in the CFD simulation. The accuracy of the calculations may be determined by measuring error between the results of the performed flow analysis over blades and high-quality data, which includes experimental data or high-resolution numerical data. The efficiency of the calculations may be determined by measuring total time spent performing the flow analysis over blades.

The accuracy of the calculation may be evaluated by calculating and assessing error function, which is defined according to mathematical expression 16. To evaluate the efficiency of the calculation, a cost function may be calculated and assessed, which is defined according to mathematical expression 15. A reward function r, defined according to mathematical expression 17, may be computed and used to consider both the accuracy and efficiency of the calculation together.

Generating the analysis performance model may include defining state **s** and action a, performing actions based on given states to complete CFD simulations for each episode, computing rewards from the CFD simulation results, and training using an actor-critic algorithm. Here, state **s** may be defined according to mathematical expression 20, and action **a** may be defined according to mathematical expression 19.

Generating the analysis performance model may include using multi-agent reinforcement learning where multiple agents perform CFD simulations in parallel to collect training data. This can accelerate the speed of data acquisition necessary for training a mesh generator for optimal CFD.

The flow analyzer over blades 150 receives arbitrary blade shape conditions and flow conditions, applies the automated analysis model to the input blade shape conditions and flow conditions to determine analysis setting parameters, performs CFD simulation, and may predict and output CFD flow analysis results. Through the prediction of CFD flow analysis results, the flow field can be predicted and output.

As described above, once training is completed in the analysis automation model generator 130, the mesh generator in the flow analyzer over blades 150 may generate a mesh that provides a converged solution within the desired computational cost in a single simulation for any blade shape and flow conditions. In other words, by automatically determining the optimal analysis settings, it can eliminate the need for repetitive CFD processes typically required for mesh convergence. Furthermore, the flow analyzer over blades 150 can predict optimal flow analysis results over blades using CFD with improved accuracy and efficiency based on the automatically determined optimal analysis settings.

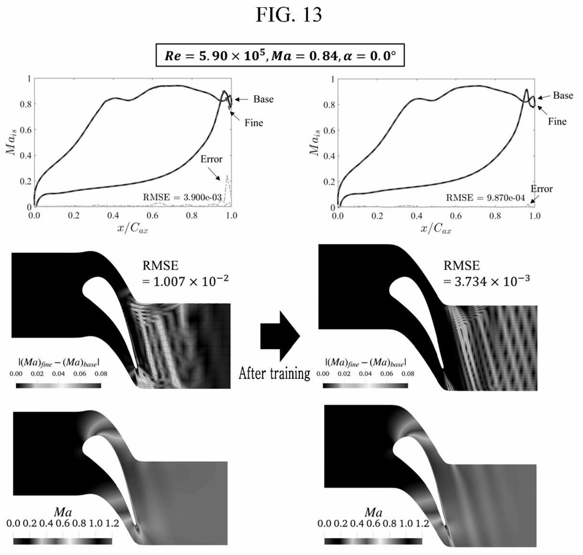

FIG. 13 is a diagram showing reinforcement learning results of a computational fluid dynamics flow analysis over blades method according to an embodiment.

A blade shape for a high-pressure turbine was trained to minimize the root mean square error (RMSE) of the flow field while considering computational efficiency for flow conditions with a Reynolds number (Re) of 5.90×10⁵, a Mach number (Ma) of 0.84, and an angle of attack (α) of 0.0 degrees. As a result, the root mean square error (RMSE) of flow variables at the wall presented in the upper part of the diagram decreased from 3.9×10⁻³ to 9.87×10⁻⁴. Additionally, as shown in the center of the diagram, the error at the trailing edge was significantly reduced, resulting in a decrease in the overall flow field's root mean square error (RMSE) from 1.007×10⁻² to 3.734×10⁻³. In fact, as presented in the lower part of the diagram, it was confirmed that the physical phenomena in the wake region were better captured after training.

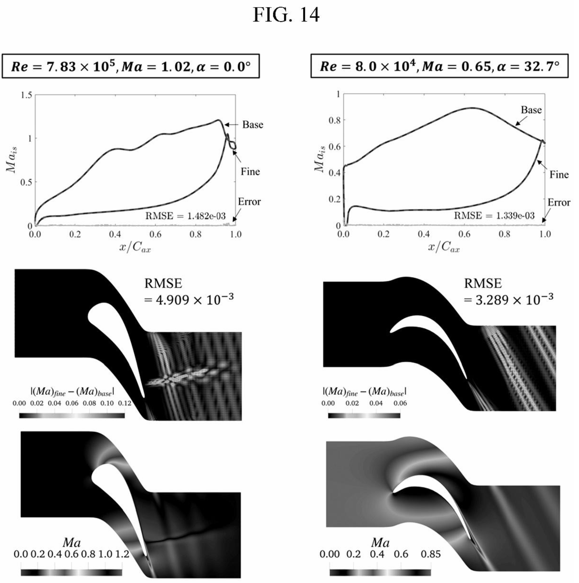

FIG. 14 is a diagram showing optimal flow analysis results over blades using CFD automatically obtained after learning is completed in a computational fluid dynamics flow analysis method over blades according to an embodiment.

The left side of the diagram shows analysis results for the high-pressure turbine blade shape under flow conditions where shock occurs. Generally, because shock causes the gradient of the flow field to change rapidly, increasing nonlinearity, even experienced engineers need to perform repeated analysis processes to derive accurate results. However, the trained neural network can predict the location where shock occurs in advance, and with just a single analysis, it produced accurate results with a root mean square error (RMSE) of 1.482×10⁻³ at the wall and 4.909×10⁻³ in the entire flow field. The right side of the diagram shows analysis results for the low-pressure turbine blade shape. This blade has a much greater curvature compared to the high-pressure turbine blade, making computational mesh generation very challenging. Nevertheless, the trained neural network not only automatically generates the mesh but also achieves high accuracy with an RMSE of 1.339×10⁻³ at the wall and 3.289×10⁻³ in the entire flow field without iterative analysis processes.

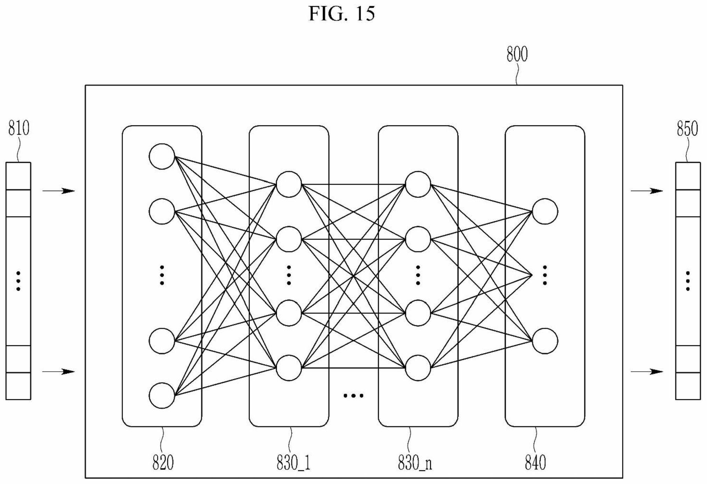

FIG. 15 is an example diagram illustrating a neural network model 800 according to an embodiment. The neural network model 800, as an example of a machine learning model, is a statistical learning algorithm or a structure that executes the algorithm, implemented based on structure of biological neural networks in machine learning technology and cognitive science.

According to the embodiment, the neural network model 800 may represent a machine learning model with problem-solving capabilities by learning to reduce error between correct output and inferred output corresponding to a specific input. This is achieved through artificial neurons called nodes, which form a network through synaptic connections similar to biological neural networks, repeatedly adjusting the weights of synapses. For example, the neural network model 800 may include any probabilistic model or neural network model used in artificial intelligence learning methods such as machine learning and deep learning.

The neural network model 800 is implemented as a multilayer perceptron (MLP) including multiple layers of nodes and connections between them. According to the embodiment, the neural network model 800 may be implemented using one of various artificial neural network model structures including MLP. As shown in FIG. 15, the neural network model 800 may include an input layer 820 where the blade shape and flow conditions are input as input data, an output layer 840 that outputs analysis setting parameters and CFD flow analysis results as output data, and n hidden layers 830_1 to 830_n, where n is a positive integer, located between the input layer 820 and the output layer 840, which receive signals from the input layer 820, extract features, and transmit them to the output layer 840. Here, the output layer 840 receives signals from the hidden layers 830_1 to 830_n and outputs them externally.

Once the machine learning model is trained, the analysis automation model generator 130 of the computational fluid dynamics flow analysis device over blades 100 according to an embodiment may store the trained analysis setting model 132 and analysis performance model 136. Here, the trained analysis setting model 132 and analysis performance model 136 may be stored in the memory of the flow analyzer over blades 150. Alternatively, the trained analysis setting model 132 and analysis performance model 136 may be stored in the memory of a server connected to the flow analyzer over blades 150 via a wired or wireless network.

The flow analyzer over blades 150 outputs predicted CFD flow analysis results by applying the prediction model generated by the analysis automation model generator 130 to the input blade shape conditions and flow conditions.

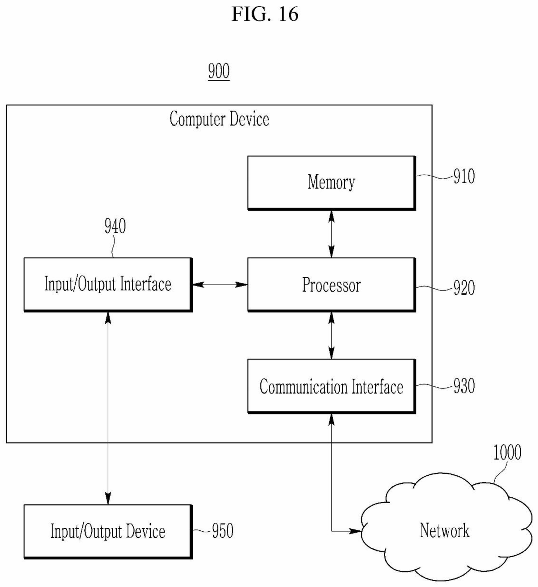

FIG. 16 illustrates an example of a computer device according to an embodiment. The analysis automation model generator 130 and flow analyzer over blades 150 described with reference to FIG. 11 may be implemented by the computer device 900 shown in FIG. 16.

A computer device 900 may include memory 910, a processor 920, a communication interface 930, and an input/output interface 940. The memory 910, which is a computer-readable recording medium, may include RAM (random access memory), ROM (read only memory), and permanent mass storage devices such as disk drives. Additionally, the memory 910 may store an operating system and at least one program code. These software components may be loaded into the memory 910 from a separate computer-readable recording medium. This separate computer-readable recording medium may include computer-readable recording media such as hard disks, flash memory, optical discs, and external hard drives. These software components may also be loaded into the memory 910 through the communication interface 930.

The processor 920 may be configured to process instructions of a computer program by performing basic arithmetic, logic, and input/output operations. Instructions may be provided to the processor 920 by the memory 910 or the communication interface 930.

The communication interface 930 may provide functionality for the computer device 900 to communicate with other devices through a network 1000.

The input/output interface 940 may be a means for interfacing with the input/output device 950. For example, input devices may include devices such as microphones, keyboards, or mice, while output devices may include devices such as displays and speakers.

The embodiments described above may be implemented in the form of computer programs that may be executed through various components on a computer, and such computer programs may be recorded on computer-readable media. Here, the media may include magnetic media such as hard disks, floppy disks, and magnetic tapes, optical recording media such as CD-ROMs and DVDs, magneto-optical media such as floptical disks, and hardware devices specifically configured to store and execute program instructions, such as ROM, RAM, flash memory, and the like.

Unless there is an explicit order stated or contradictory information provided for the steps comprising a method according to an embodiment, these steps may be performed in an appropriate order. The invention is not necessarily limited to the order in which these steps are described. In this invention, the use of all examples or illustrative terms (e.g., etc.) is simply to explain the invention in detail and does not limit the scope of the invention. Additionally, those skilled in the art will recognize that various modifications, combinations, and changes can be made within the scope of the patent claims or their equivalents.

Although the embodiments of the present invention have been described in detail above, the scope of the present invention is not limited to this, and various modifications and improvements made by those skilled in the art to which the present invention pertains also fall within the scope of the present invention.

## Claims

1. A computational fluid dynamics (CFD) flow analysis method for blades, the method comprising:
generating an analysis automation model that predicts CFD flow analysis results according to input analysis conditions, the generating an analysis automation model comprising inputting a blade shape and flow conditions, determining analysis settings for flow analysis over blades, performing flow analysis over blades by conducting a computational fluid dynamics (CFD) simulation based on the determined analysis setting parameters, evaluating results of the performed flow analysis over blades, and training through reinforcement learning using an artificial neural network to satisfy predetermined evaluation criteria;
inputting arbitrary blade shape conditions and flow conditions; and
determining analysis setting parameters by applying the analysis automation model to the input blade shape conditions and flow conditions, predicting CFD simulation, and outputting the predicted CFD simulation as flow analysis results.

2. The method of claim 1, wherein the generating an analysis automation model comprises,
generating an analysis setting model that determines analysis setting parameters according to the input analysis conditions, the generating an analysis setting model comprising selecting analysis settings for the flow analysis over blades based on the input blade shape and flow conditions, and training the analysis setting model using a deep reinforcement learning algorithm with an artificial neural network such that the selected analysis settings satisfy predetermined quality criteria, and
generating an analysis performance model that predicts CFD flow analysis results, the generating an analysis performance model comprising performing the flow analysis over blades using the CFD simulation, evaluating the results of the performed flow analysis over blades, and training the analysis performance model using a deep reinforcement learning algorithm with an artificial neural network to satisfy the evaluation criteria.

3. The method of claim 2, wherein the analysis settings for the flow analysis over blades comprise generating a computational mesh, selecting a turbulence model, and choosing a numerical method.

4. The method of claim 3, wherein the blade shape is expressed by blade shape parameters (BSP) and a blade pitch, and the flow conditions are represented in a dimensionless manner by the isentropic Reynolds number and the Mach number at the outlet, and the inflow angle.

5. The method of claim 3, wherein the generating analysis setting model comprises,
defining state s as the following equation, $s = \left[BSP,pitch,{N}_{o},{β}_{le},{β}_{te},Δ{n}_{1}\right] ,$
defining action a as the following equation, $a = \left[{y}_{in}, {y}_{out}, {α}_{camber}, {x}_{in}^{o}, {x}_{out}^{o}, δ\right] ,$ and
generating a mesh using meshing parameters obtained by determining action based on given state for each episode, evaluating quality of the generated mesh and calculating a reward, and training the analysis setting model using a single-step actor-critic algorithm.
Here, BSP denotes blade shape parameters, pitch represents a blade spacing, Nₒ represents a total number of nodes in O-type mesh, βₗₑ represents degree of clustering of nodes at a leading edge, βₜₑ represents degree of clustering of nodes at a trailing edge, and Δn₁ represents first cell height in a direction normal to a blade surface,
yᵢₙ represents inlet position in a vertical direction, yₒᵤₜ represents outlet position in a vertical direction, α_{camber} represents degree of curvature of periodic boundaries following a camber line, x^{o}ᵢₙ represents HO-type interface position in a horizontal direction, x^{o}ₒᵤₜ represents OH-type interface position in a horizontal direction, and δ represents a ratio of numbers of nodes of O-type mesh in a tangential direction to a normal direction to blade surface.

6. The method of claim 5, wherein the reward is defined based on mesh quality that minimizes numerical errors due to geometric defects in the generated mesh, and
the mesh quality is evaluated by calculating a reward defined using mesh quality metrics including a ratio of determinants of Jacobian matrices Q_{J} and a cell skewness Q_{S}.

7. The method of claim 2, wherein the evaluation criteria for assessing the results of the performed flow analysis over blades comprises a reward function that evaluates accuracy of calculation and efficiency of calculation in the CFD simulation.

8. The method of claim 7, wherein the accuracy of calculation is computed through an error between high-quality data, which includes experimental data or high-resolution numerical data, and the results of the performed flow analysis over blades, and
the efficiency of calculation is computed by measuring a total time required to perform the flow analysis over blades.

9. The method of claim 8, wherein the generating analysis performance model comprises,
defining state s as the following equation, $s = \left[BSP, pitch, {Re}_{is , out}, {Ma}_{is , out}, {θ}_{in}, w\right] ,$
defining action a as the following equation, $a = \left[{N}_{o},{β}_{le},{β}_{te},Δ{n}_{1}\right] ,$ and
performing action based on given state for each episode to complete CFD simulation, calculating the reward from the CFD simulation results, and training the analysis performance model using an actor-critic algorithm.
Here, BSP denotes blade shape parameters, pitch represents a blade spacing, Re_{is,out} represents isentropic Reynolds number at an outlet, Ma_{is,out} represents Mach number at an outlet, θᵢₙ represents an inflow angle, w represents weight, Nₒ represents a total number of nodes in O-type mesh, βₗₑ represents degree of clustering of nodes at a leading edge, βₜₑ represents degree of clustering of nodes at a trailing edge, and Δn₁ represents first cell height in a direction normal to a blade surface.

10. The method of claim 2, wherein the generating the analysis performance model comprises collecting learning data by performing CFD simulations in parallel with multiple agents using multi-agent reinforcement learning.

11. A computational fluid dynamics (CFD) flow analysis device for blades, the device comprising:
an analysis automation model generator that generates an analysis automation model that predicts computational fluid dynamics flow analysis results according to input analysis conditions, the analysis automation model generator inputting a blade shape and flow conditions, determining analysis settings for flow analysis over blades, performing flow analysis over blades by conducting a computational fluid dynamics simulation based on the determined analysis setting parameters, evaluating results of the performed flow analysis over blades, and training the analysis automation model through reinforcement learning using artificial neural network to satisfy predetermined evaluation criteria; and
a flow analyzer over blades that receives input of arbitrary blade shape conditions and flow conditions, applies the analysis automation model to the input blade shape conditions and flow conditions to determine analysis setting parameters, and performs CFD simulation to predict and output flow field as CFD flow analysis results.

12. The device of claim 11, wherein the analysis automation model generator comprises,
an analysis setting model that determines analysis setting parameters according to the input analysis conditions, the analysis setting model selecting analysis settings for the flow analysis over blades based on the input blade shape and flow conditions, and being trained using a deep reinforcement learning algorithm with an artificial neural network so that the selected analysis settings satisfy predetermined quality criteria, and
an analysis performance model that predicts CFD flow analysis results, the analysis performance model performing the flow analysis over blades with the CFD simulation, evaluating results of the performed flow analysis over blades, and being trained with a deep reinforcement learning algorithm using an artificial neural network to satisfy the evaluation criteria.

13. A computational fluid dynamics (CFD) automation method for optimal flow analysis over blades, the method comprises:
inputting analysis conditions including a blade shape and flow conditions;
determining analysis settings for the flow analysis over blades;
performing the flow analysis over blades by conducting a computational fluid dynamics simulation based on the determined analysis setting parameters;
evaluating results of the performed flow analysis over blades; and
training through a reinforcement learning using an artificial neural network such that the results of the flow analysis over blades satisfy predetermined evaluation criteria.

14. The method of claim 13, further comprising
selecting analysis settings for the flow analysis over blades based on the input blade shape and the flow conditions, and training using a deep reinforcement learning algorithm with an artificial neural network such that the selected analysis settings satisfy predetermined quality criteria.

15. The method of claim 14, wherein the analysis settings for the flow analysis over blades comprises generating a computational mesh, selecting a turbulence model, and choosing a numerical method.

16. The method of claim 13, wherein the evaluation criteria for assessing the results of the performed flow analysis over blades comprises a reward function that evaluates accuracy of calculations and efficiency of calculations in the CFD simulation.

17. The method of claim 16, wherein the accuracy of calculation is computed through an error between high-quality data, which includes experimental data or high-resolution numerical data, and the results of the performed flow analysis over blades, and
the efficiency of calculation is computed by measuring a total time required to perform the flow analysis over blades.

18. The method of claim 13, wherein the generating the analysis performance model comprises collecting learning data by performing CFD simulations in parallel with multiple agents using multi-agent reinforcement learning.

19. The method of claim 13, wherein the reinforcement learning comprises calculating using a deep reinforcement learning algorithm including Deep Q-Network, PPO (Proximal Policy Optimization), or Actor-Critic algorithms, based on an artificial neural network technology.

20. A computer device comprising at least one processor configured to execute computer-readable instructions, wherein
the at least one processor is configured to
generate an analysis automation model that predicts CFD flow analysis results according to input analysis conditions, the generating an analysis automation model comprising inputting a blade shape and flow conditions, determining analysis settings for flow analysis over blades, performing flow analysis over blades by conducting computational fluid dynamics simulation based on the determined analysis setting parameters, evaluating results of the performed flow analysis over blades, and training the analysis automation model through reinforcement learning using an artificial neural network to satisfy predetermined evaluation criteria;
input arbitrary blade shape conditions and flow conditions; and
determine analysis setting parameters by applying the analysis automation model to the input blade shape and flow conditions, predict CFD simulation, and output the predicted CFD simulation as flow analysis results.
